# EUROPEAN PATENT APPLICATION

(11) **EP 4 609 689 A1**
(43) Date of publication of application: **03.09.2025**
(21) Application number: 25160503.6
(22) Date of filing: 27.02.2025
(51) Int. Cl.: A01C 7/08, A01C 7/20, A01C 15/04

(54) **AIR BOOM SPREADER FOR PARTICULATE MATERIAL AND AIR BOOM ASSEMBLY AND DROP TUBE THEREFOR**

(30) Priority: 27.02.2024 US 202463558386 P
(71) Applicant: Salford Group Inc., Salford, Ontario N0J 1W0 (CA)
(72) Inventor: STOECKLI, Peter, PUTNAM, N0L 2B0 (CA); AVERINK, John Mark, NORWICH, N0J 1P0 (CA); HELD, Gavin, JANESVILLE, 56048 (US); MAGEE, Mark A., URBANDALE, 50323 (US)
(74) Representative: ZBM Patents - Zea, Barlocci & Markvardsen

(57) **Abstract**

A drop tube (1) for dropping particulate material from an air boom assembly (80) has, in order: a rigid elbow (10) connectable to an air boom outlet; an upper flexible section (20) bendable in at least a direction parallel to a direction of travel of the air boom assembly; a rigid section (30) having an air exhaust vent (33) in a side thereof and a deflector (34) therein; a lower flexible section (40) bendable in at least the direction parallel to the direction of travel; and, an exit aperture (53) having a cross-sectional area less than a cross-sectional area of the lower flexible section of the drop tube above the exit aperture.

## Description

### Field

This application relates to agriculture, in particular to an apparatus for applying solid agricultural product to a field.

### Background

Air boom spreading apparatuses for depositing particulate material (e.g., seed, fertilizer and the like) on the ground (e.g., in a field) in evenly spaced-apart rows are known, for example the apparatuses described in International Published Patent Applications WO 2018/170594 published September 27, 2018 and WO 2021/06-2520 published April 8, 2021. Such apparatuses generally comprise a hopper for containing the particulate material, a metering device that receives the particulate material from the hopper and partitions the particulate material into a plurality of outlets transversely spaced-apart on one or more booms in a direction perpendicular to the direction of travel of the apparatus, and, a plurality of air lines connecting the metering device to the plurality of outlets for conveying the particulate material in an air stream from the metering device to the plurality of outlets. A blower (e.g., a fan) provides the air stream and the apparatus may be self-propelled or towed by a prime mover (e.g., a truck, a tractor or the like).

Particulate material from the hopper is ultimately directed downwardly through the outlets on the boom toward the ground. To help control the flow of the particulate material out of the boom, the outlets may be fitted with drop tubes that extend downwardly from the boom outlets to bring the particulate material closer to the ground. However, especially for the application of fertilizer, the ends of the drop tubes remain above the ground instead of in a trench dug into the ground, which is commonly done for applying seed and liquid fertilizer. Because the ends of the drop tubes remain above the ground, particulate material (e.g., solid fertilizer) ejected from the drop tubes tends to bounce and scatter in random directions due to the speed of the apparatus, and hence the speed of the fertilizer, relative to the ground thereby creating a wider than desired spread pattern of the fertilizer on the ground.

There remains a need for a device that further helps control the flow of particulate material, especially fertilizer, out of a boom of an air boom spreader to provide suitably narrow strips of the particulate material on the ground as the air boom spreader travels along the ground.

### Summary

A drop tube for dropping particulate fertilizer from an air boom assembly onto a field comprises: a rigid elbow connectable to an air boom outlet of the air boom assembly and configured to cooperate with the air boom outlet to direct the particulate fertilizer away from the air boom outlet into the drop tube and vertically downward in the drop tube when in operation; an upper flexible section connected to the rigid elbow and in particulate fertilizer communication with the rigid elbow to receive the particulate fertilizer from the rigid elbow, the upper flexible section bendable in at least a direction parallel to a direction of travel of the air boom assembly to permit flexing of the drop tube in response to contacting obstructions in the direction of travel; a rigid section connected to the upper flexible section and in particulate fertilizer communication with the upper flexible section to receive the particulate fertilizer from the upper flexible section, the rigid section comprising an air exhaust vent in a side thereof and a deflector therein, the deflector constricting flow of air and the particulate fertilizer in the rigid section to a position below the air vent where the deflector no longer restricts the flow of the air and particulate fertilizer; a lower flexible section connected to the rigid section and in particulate fertilizer communication with the rigid section to receive the particulate fertilizer from the rigid section; the lower flexible section bendable in at least the direction parallel to the direction of travel of the air boom assembly to permit flexing of the drop tube in response to contacting obstructions in the direction of travel; and, an exit aperture through which the particulate fertilizer exits the drop tube, the exit aperture having a cross-sectional area less than a cross-sectional area of the lower flexible section of the drop tube above the exit aperture.

An air boom assembly of an air boom spreader comprises a boom; a plurality of air boom outlets transversely spaced apart on the boom, a plurality of air lines terminating at respective air boom outlets of the plurality of air boom outlets; and, a plurality of drop tubes as described above connected to respective air boom outlets of the plurality of air boom outlets.

An air boom spreader for particulate fertilizer comprises: a hopper for containing the particulate fertilizer; a particulate fertilizer metering device in particulate fertilizer communication with the hopper, the metering device partitioning the particulate fertilizer into portions; a blower to generate an air stream; and, the air boom assembly described above, wherein the plurality of air lines are in fluid communication with the blower and in particulate fertilizer communication with the metering device to receive respective portions of the particulate fertilizer and transport the respective portions to the respective air boom outlets and then to respective drop tubes by the air stream.

The rigid elbow comprises a rigid pipe bent to redirect particulate material flowing substantially horizontally out of the air boom outlet toward the ground during operation of the air boom. The rigid elbow is configured to be joined to the air boom outlet so that the rigid elbow in particulate material communication with the air boom outlet. The rigid elbow is made of a non-bendable material, such as steel, hard plastic and the like. In some embodiments, the rigid elbow directs the particulate material vertically downward in the drop tube. In some embodiments, the rigid elbow comprises a first pipe portion and a second pipe portion whereby angle between longitudinal axes of the first and second pipe portions is sufficient to achieve the desired redirection of the particulate material. lin some embodiments, the angle is in a range of 45-90o. In some embodiments, the angle is 90o and the rigid elbow is a 90-degree elbow. In some embodiments, the rigid elbow gradually bends (i.e., flow path of the particulate material gradually changes) while in other embodiments the rigid elbow abruptly bends (i.e., flow path of the particulate material sharply changes). In some embodiments, a proximal end of the rigid elbow is connectable to the air boom outlet by an insertion fit. In some embodiments, the proximal end of the first pipe portion has a small enough outside diameter to be insertable into the air boom outlet. In some embodiments, the proximal end of the first pipe portion has a large enough outside diameter to be able to have the air boom outlet at least partially inserted therein.

The upper flexible section is connected to and in particulate material communication with the rigid elbow. In some embodiments, a proximal end of the upper flexible section is connected to a distal end of the rigid elbow. The upper flexible section is in particulate material communication with the rigid elbow to receive the particulate material flowing downwardly from the rigid elbow. The upper flexible section is bendable in at least a direction parallel to a direction of travel of the air boom assembly to permit flexing of the drop tube in response to contacting obstructions in the direction of travel. In some embodiments, the direction parallel to the direction of travel is a rearward direction. In some embodiments, the upper flexible section is not bendable in a forward direction. In some embodiments, the upper flexible section is made of a bendable material, such as an elastomer (e.g., a rubber), a thermoplastic and the like. In some embodiments, the upper flexible section comprises an elastomeric hose, e.g., a rubber hose. In some embodiments, the upper flexible section is connected to the rigid elbow by a friction fit. In some embodiments, the connection is secured by at least one clamp (e.g., a hose clamp), an adhesive, a tape or any combination thereof.

The rigid section is connected to the upper flexible section and in particulate material communication with the upper flexible section. In some embodiments, a proximal end of the rigid section is connected to a distal end of the upper flexible section. The rigid section is in particulate material communication with the upper flexible section to receive the particulate material flowing downwardly from the upper flexible section. The rigid section is made of a non-bendable material, such as steel, hard plastic and the like. In some embodiments, the rigid section comprises a rigid pipe. In some embodiments, the rigid section is connected to the upper flexible section by a friction fit. In some embodiments, the connection is secured by at least one clamp (e.g., a hose clamp), an adhesive, a tape or any combination thereof.

The rigid section comprises an air exhaust vent in a side thereof, for example a rear side thereof, and a deflector therein. In some embodiments, the air vent comprises a notch cut into the side of the rigid section, the notch having a substantially horizontal lower edge extending arcuately along a circumferential wall of the rigid section so that ends of the lower edge are opposed through an interior of the rigid section along a chord through the interior of the rigid section. The notch further has an upper edge extending between the ends of the lower edge forming a parabola with an apex above the lower edge. The parabola angled from the apex of the parabola to the ends of the lower edge with respect to vertical and horizontal.

The deflector acts, at least in part, to deflect particulate material away from the air vent so that no particulate material can escape the drop tube before reaching the exit aperture. In some embodiments, the deflector comprises a plate installed in the interior of the rigid section extending between the upper edge of the notch and the ends of the lower edge of the notch. As such, the plate extends from the upper edge of the notch at an angle downwardly into the interior of the rigid section thereby gradually reducing the effective cross-sectional area of the rigid section through which the particulate material flows. Side edges of the plate are shaped to conform to the upper edge of the notch to seal the upper edge of the notch to the air flow and the flow of particulate as the air flow and the particulate material are deflected by contact with the plate. The plate extends beyond the upper edge of the notch to an exterior of the rigid section and extends beyond the lower edge of the notch in the interior of the rigid section. In this way, the plate is held in place by the upper and lower edges of the notch together with a clamp. In some embodiments, a lower portion of the plate is angled more downwardly with respect to an upper portion of the plate. The upper portion of the plate deflects the air and particulate material flowing downwardly from above the notch and the plate gradually reduces the effective cross-sectional area of the rigid section through which the particulate material flows in the region of the notch. The lower portion of the plate either reduces or halts the rate of reduction of the effective cross-sectional area of the rigid section through which the particulate material flows. In some embodiments, the lower portion of the plate begins proximate the lower edge of the notch, for example just above the lower edge of the notch. In some embodiments, the lower portion of the plate extends parallel to the walls of the rigid section to a position below the lower edge of the notch thereby separating the interior of the rigid section into two longitudinal channels, a first channel through which the particulate material flows downwardly and a second channel in fluid communication the notch through which air in the drop tube can be vented. At a lower end of the lower portion of the plate, the effective cross-sectional area of the rigid section through which the particulate material flows abruptly increases to the cross-sectional area of the rigid section and the particulate material continues to flow downwardly past the plate while a portion of air flow is redirected upward through the air vent.

The deflector is in the interior of the rigid section and constricts flow of air and the particulate material in the rigid section from a position above the air vent to a position below the air vent where the deflector no longer restricts the flow of the air and particulate material. In effect, the deflector reduces an effective cross-sectional area of the interior of the rigid section in a region of the air event and guides both the downward air flow and the downward flow of particulate material into a smaller volume as the air and particulate material flow past the position of the air event while isolating the air flow and the particulate material flow from the air event in this region of the rigid section. The deflector extends sufficiently far below the air vent that once the particulate material flow is past the deflector where the effective cross-sectional area of the interior of the rigid section once again expands to be defined only by walls of the rigid section, the particulate material continues to flow down under the influence of gravity without being ejected through the air vent.

The lower flexible section is connected to and in particulate material communication with the rigid section. In some embodiments, a proximal end of the lower flexible section is connected to a distal end of the rigid section. The lower flexible section is in particulate material communication with the rigid section to receive the particulate material flowing downwardly from the rigid section. The lower flexible section is bendable in at least the direction parallel to the direction of travel of the air boom assembly to permit flexing of the drop tube in response to contacting obstructions in the direction of travel. In some embodiments, the direction parallel to the direction of travel is the rearward direction. In some embodiments, the lower flexible section is made of a bendable material, such as an elastomer (e.g., a rubber), a thermoplastic and the like. In some embodiments, the lower flexible section comprises an elastomeric hose, e.g., a rubber hose. In some embodiments, the lower flexible section is connected to the rigid section by a friction fit. In some embodiments, the connection is secured by a clamp (e.g., a hose clamp), an adhesive, a tape or any combination thereof.

The exit aperture is an opening at a distal end of the drop tube through which the particulate material exits the drop tube. The exit aperture is a constricted opening having a cross-sectional area less than a cross-sectional area of the lower flexible section of the drop tube above the exit aperture. Because the exit aperture has a smaller cross-sectional area than the cross-sectional area of most of the drop tube, a restriction in the air flow is caused at the exit aperture, which slows the rate of fall of the particulate material but risks plugging the drop tube. However, the restriction in the air flow caused by the exit aperture is relieved by some of the air flowing upwardly and out through the air vent thereby avoiding plugging of the drop tube with the particulate material. In some embodiments, the exit aperture is an opening at a bottom end (distal end) of the lower flexible section. In some embodiments, the drop tube further comprises a rigid outlet tube connected to and in particulate material communication with the lower flexible section to receive the particulate material from the lower flexible section. The rigid outlet tube therefore comprises the exit aperture. In some embodiments, the rigid outlet tube is connected to the lower flexible section by a friction fit. In some embodiments, the connection is secured by at least one clamp (e.g., a hose clamp), an adhesive, a tape or any combination thereof.

In some embodiments, the drop tube further comprises a guide for reducing transverse flexing of the drop tube relative to the direction parallel to the direction of travel while permitting longitudinal flexing of the guide tube in the direction parallel to the direction of travel. In some embodiments, the guide permits longitudinal flexing of the guide tube in a rearward direction while constraining flexing of the drop tube in the transverse direction and in a forward direction. In some embodiments, the guide comprises a ring around but not attached to a circumference of the rigid section of the drop tube whereby the rigid section can move horizontally within the ring. In some embodiments, the guide comprises a hinge rigidly connected to the elbow. In some embodiments, the hinge comprises a hinge pin. In some embodiment, the hinge pin is oriented horizontally with respect to the ground during operation. In some embodiments, the guide comprises a rod connected to the ring, preferably rigidly connected to the ring, and pivotally connected to the hinge. In some embodiments, the rod is pivotable on the hinge in the direction parallel to the direction of travel but not pivotable in a direction transverse to the direction of travel. In some embodiments, the rod is pivotable on the hinge in a rearward direction but not a forward direction relative to the direction of travel. In some embodiments, the ring is above the air exhaust vent and the deflector (i.e., the air exhaust vent and the deflector are below the ring).

Because the flow of particulate material has been slowed in the drop tube by the deflector and by the exit aperture having a smaller cross-sectional area, particulate material will exit the drop tube at a lower velocity thereby reducing the tendency of the particulate material to bounce and scatter when dropped on the field, especially when the particulate material is not being deposited in a furrow. By controlling the size of the air vent, the location of the air vent, the length of the deflector, the total length of the drop tube and the cross-sectional area of the exit aperture, it is possible to adjust the exit velocity of the particulate material to a desired velocity, for example to near a zero velocity.

The combination of flexible sections and a rigid section, especially with the rigid section between the flexible sections, helps the drop tube travel through crops (e.g., corn and other tall crop plants) without being pushed out of alignment with a crop row by the crop plants while providing some flexibility in the direction of travel so that when the drop tube encounters an obstruction (e.g., plant leaves, plant stalks and the like) in the direction of travel of the air boom spreader, damage to one or both of the drop tube and the crop is minimized.

The drop tube comprising a combination of the air vent, the deflector, the flexible and rigid sections, and the constricted exit opening, especially further in combination with the guide, provide much narrow strips of the particulate material on the ground between crop rows as the air boom spreader travels in a field during an agricultural operation.

Further features will be described or will become apparent in the course of the following detailed description. It should be understood that each feature described herein may be utilized in any combination with any one or more of the other described features, and that each feature does not necessarily rely on the presence of another feature except where evident to one of skill in the art.

### Brief Description of the Drawings

For clearer understanding, preferred embodiments will now be described in detail by way of example, with reference to the accompanying drawings, in which:
Fig. 1 depicts a rear view of an embodiment of a drop tube for particulate fertilizer being spread from an air boom spreader.
Fig. 2A depicts an exploded isometric view of the drop tube of Fig. 1.
Fig. 2B depicts an exploded side view of the drop tube of Fig. 1.
Fig. 2C depicts an exploded rear view of the drop tube of Fig. 1.
Fig. 3 depicts a magnified side cross-sectional view of a rigid section of the drop tube of Fig. 1 illustrating an air exhaust aperture and a deflector in the drop tube.
Fig. 4 depicts an air boom assembly of an air boom spreader having a plurality of the drop tubes of Fig. 1 fitted to a corresponding plurality of air boom outlets on a boom of the air boom assembly.
Fig. 5 depicts an air boom spreader having the air boom assembly of Fig. 4 mounted thereon.

### Detailed Description

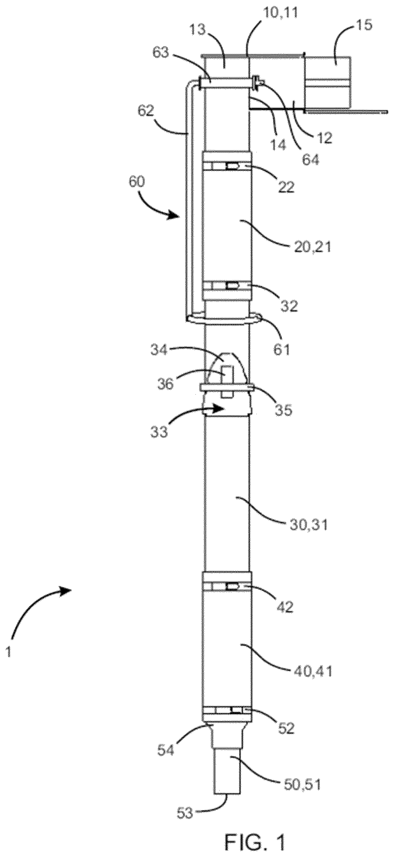

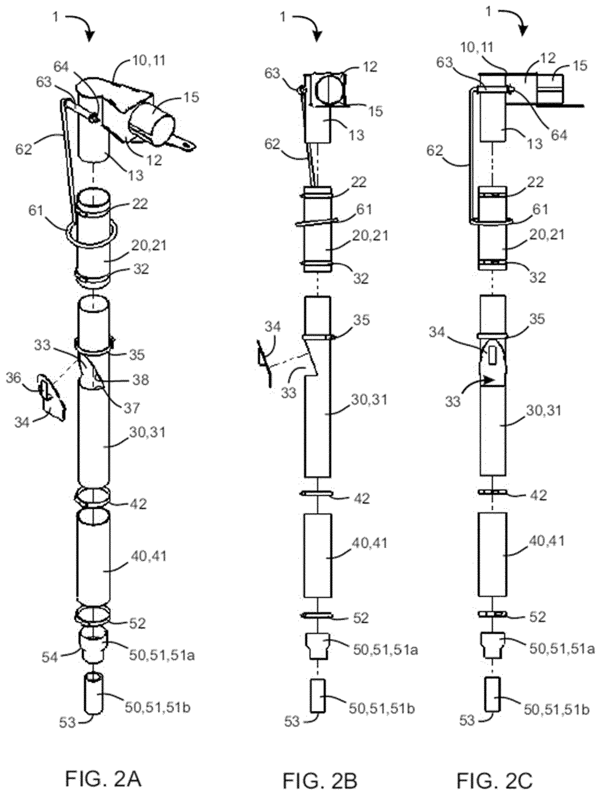

With reference to Fig. 1 to Fig. 3, a drop tube **1** for particulate fertilizer spread by an air boom spreader. comprises five tube sections including a rigid elbow **10,** an upper flexible section **20,** a rigid section **30,** a lower flexible section **40** and a drop tube outlet **50.**

The rigid elbow **10** comprises a steel pipe **11** having a horizontally oriented first pipe portion **12** and a vertically oriented second pipe portion **13** that meet at a 90° joint **14.** A proximal end of the first pipe portion **11** comprises a friction fitting **15** for connecting the drop tube **1** to an air boom outlet on an air boom assembly. Alternatively, or additionally, the proximal end of the first pipe portion can be connected to the air boom outlet by at least one clamp, for example two clamps. Particulate fertilizer flowing from the air boom outlet into the elbow **10** is directed downwardly into the second pipe portion **13.**

The upper flexible portion **20** comprises a rubber hose **21** connected to a distal end of the second pipe portion **13** of the elbow **10** by insertion of the distal end of the second pipe portion **13** into a proximal end of the upper flexible portion **20** so that the rubber hose **21** conforms to and frictionally grips the second pipe portion **13.** The connection is secured using a first hose clamp **22.** The upper flexible portion **20** is oriented vertically so that particulate fertilizer flows vertically downward from the elbow **10** into the upper flexible portion **20** where the particulate fertilizer continues to flow vertically downward.

The rigid section **30** comprises a steel pipe **31** connected to a distal end of the upper flexible portion **20** by insertion of a proximal end of the steel pipe **31** into the distal end of the upper flexible portion **20** so that the rubber hose **21** conforms to and frictionally grips the proximal end of the steel pipe **31.** The connection is secured using a second hose clamp **32.** The rigid section **30** is oriented vertically so that particulate fertilizer flows vertically downward from the upper flexible portion **20** into the rigid section **30** where the particulate fertilizer continues to flow vertically downward. The rigid section **30** further comprises an air exhaust vent **33,** which is an aperture in a rearward side of the steel pipe **31** located near the proximal end of the steel pipe **31.** Associated with the air exhaust vent **33** is a deflector **34** comprising a steel deflection plate situated inside the steel pipe **31.**

The lower flexible portion **40** comprises a rubber hose **41** connected to a distal end of the steel pipe **31** by insertion of a distal end of the steel pipe **31** into a proximal end of the lower flexible portion **40** so that the rubber hose **41** conforms to and frictionally grips the distal end of the steel pipe **31.** The connection is secured using a third hose clamp **42.** The lower flexible portion **40** is oriented vertically so that particulate fertilizer flows vertically downward from the rigid section **30** into the lower flexible portion **40** where the particulate fertilizer continues to flow vertically downward.

The drop tube outlet **50** comprises a steel tube **51** connected to a distal end of the rubber hose **41** by insertion of a proximal end of the steel tube **51** into the distal end of the lower flexible portion **40** so that the rubber hose **41** conforms to and frictionally grips the proximal end of the steel tube **51.** The connection is secured using a fourth hose clamp **52.** The drop tube outlet **50** is oriented vertically so that particulate fertilizer flows vertically downward from the lower flexible portion **40** into the drop tube outlet **50** where the particulate fertilizer continues to flow vertically downward until the particulate fertilizer exits the drop tube **1** at an exit aperture **53** at a distal end of the steel tube **51.** The steel tube **51** has an inward taper **54** at least partially along a length of the drop tube outlet **50,** which narrows the drop tube outlet **50.** The steel tube **51** can be a single tube or provided in two or more parts. As seen in the Figures, the steel tube **51** is provided as an upper tapered part **51a** and a lower straight part **51b,** which are fitted together by a friction fit. As a result of the taper **54,** the exit aperture **53** has a smaller cross-sectional area than the elbow **10,** the upper flexible section **20,** the rigid section **30** and the lower flexible section **40,** which causes the particulate fertilizer flowing through the drop tube **1** to slow thereby slowing the rate of fall of the particulate fertilizer exiting the drop tube **1.**

The drop tube **1** further comprises a guide **60** for constraining transverse and forward flexing of the drop tube **1.** The guide **60** comprises a guide ring **61,** a guide rod **62** and a guide hinge **63.** The guide hinge **63** is fixedly attached to a rear side the second pipe portion **13** of the elbow **10,** so that a rotatable hinge pin **64** of the guide hinge **63** is oriented horizontally. A proximal end of the guide rod **62** is fixedly attached to the hinge pin **64** so that the guide rod is pivotally connected to the guide hinge **63.** The hinge pin **64** may be monolithic with the guide rod **62,** in which case the hinge pin **64** can be an extension of the guide rod **62** as illustrated in the Figures. Alternatively, the guide rod **62** may be welded, glued, bolted or the like to the hinge pin **64.** The guide rod **62** extends downwardly from the guide hinge **63** and a distal end of the guide rod **62** is fixedly attached to the guide ring **61.** The guide ring **61** encircles the rigid section **30** at a location above the air exhaust vent **33** and below the distal end of the upper flexible portion **20.** A gap between the guide ring **61** and the rigid section **30** permits some movement of the rigid section **30** within the guide ring **61.** However, because the hinge pin **64** is located on the rear side of the elbow **10** and is horizontally oriented, transverse and forward motions of the rigid section **30** are constrained only to the size of the gap between the rigid section **30** and the guide ring **61.** On the other hand, when the rigid section **30** moves rearward to encounter the guide ring **61,** further rearward motion of the rigid section **30** causes the guide rod **62** to pivot on the guide hinge **63** about a rotation axis of the hinge pin **64** allowing for considerable rearward flexing of the drop tube **1.**

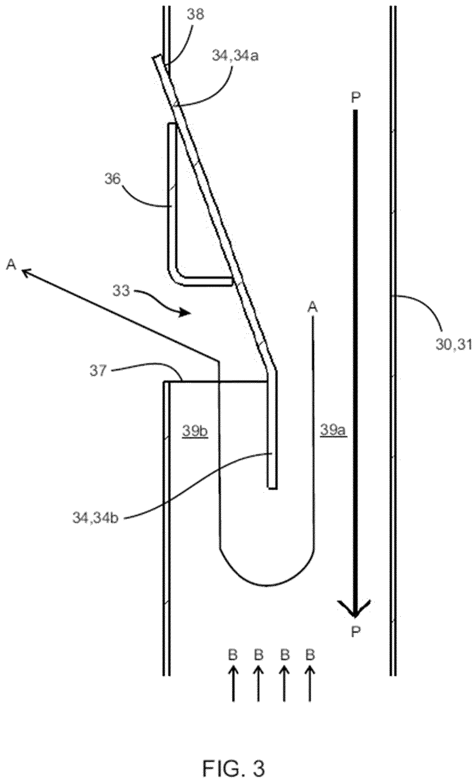

With specific reference to Fig. 3, the rigid section **30** of the drop tube **1** comprises the air exhaust vent **33** in the rearward side of the steel pipe **31.** The air exhaust vent **33** comprises a lower edge **37** and an upper edge **38.** The lower edge **37** is formed by a horizontal arcuate section of a wall of the steel pipe **31** and the upper edge **38** is formed by a parabolic section of the wall of the steel pipe **31,** the parabolic section having an apex above the lower edge **37** and arms extending downwardly to meet the lower edge **37** at ends of the lower edge **37** thereby forming a notch in the rearward side of the steel pipe **31.** The deflector **34** comprises an upper plate portion **34a,** a lower plate portion **34b** and a handle **36** attached to an outer face of the upper plate portion **34a.** The handle **36** is used to grip the deflector **34** for insertion and removal of the deflector **34** into and out of the drop tube **1** through the air exhaust vent **33.** Once inserted into the drop tube **1,** the deflector **34** is secured in place by a deflection plate clamp **35.** Inside the drop tube **1,** an inner face of the upper plate portion **34a** of the deflector **34** engages the upper edge **38** of the air exhaust vent **33** and the upper plate portion **34a** extends inwardly into the steel pipe **31** at a non-vertical downwardly oriented angle, for example at an angle in a range of about 10-45° relative to a longitudinal axis of the drop tube **1.** The lower plate portion **34b** forms an angle with the upper plate portion **34a** such that the lower plate portion **34b** extends vertically downward inside the steel pipe **31** from a distal end of the upper plate portion **34a.** The lower plate portion **34b** meets the upper plate portion **34a** at a position just above the lower edge **37** of the air exhaust vent **33** so that an outer face of the lower plate portion **34b** engages the lower edge of the air exhaust vent **33.** Together the deflection plate clamp **35,** engagement of inner face of the upper plate portion **34a** with the upper edge **38** of the air exhaust vent **33** and engagement of the outer face of the lower plate portion **34b** with the lower edge of the air exhaust vent **33** both holds the deflector **34** in place and seals the air exhaust vent **33** along the upper edge **38** so that air and particulate fertilizer cannot escape the drop tube **1** through the air exhaust vent **33** along the upper edge **38.** The lower plate portion **34b** extends downwardly in the steel pipe **31** for a distance far enough below the lower edge **37** of the air exhaust vent **33** so that particulate fertilizer cannot escape the drop tube **1** through the air exhaust vent **33** along the lower edge **37** of the air exhaust vent **33.**

As further seen in Fig. 3, below the air exhaust vent **33,** the lower plate portion **34b** divides the steel pipe **31** into two parallel channels, a first channel **39a** and a second channel **39b.** As particulate material and air flow downwardly in the rigid portion **30** along a particulate material flow path **P** and an air flow path **A,** respectively, the upper plate portion **34a** of the deflector **34** deflects the particulate material and air away from the air exhaust vent **33** into a progressively smaller volume thereby restricting the air flow as the particulate material and the air flow past the deflector **34** until the particulate material flow path **P** and the air flow path **A** enter the first channel **39b** where the air flow restriction stops. When the particulate material and air flow past a distal end of the lower plate portion **34b,** the volume abruptly increases. However, as described above, the exit aperture **53** at the distal end of the drop tube **1** has a smaller cross-sectional area than the tube sections **10, 20, 30** and **40,** which provides a reverse air flow **B** on the particulate fertilizer flowing through the drop tube **1.** The reverse air flow **B** is experienced at the distal end of the lower plate portion **34b.** The particulate fertilizer has sufficient mass to continue flowing downwardly, albeit slowly, along the particulate material flow path **P,** but at least a portion of the air flow **A** is redirected upwardly to flow through the second channel **39b** to be vented out the air exhaust vent **33** to prevent clogging of the exit aperture **53** by the particulate material.

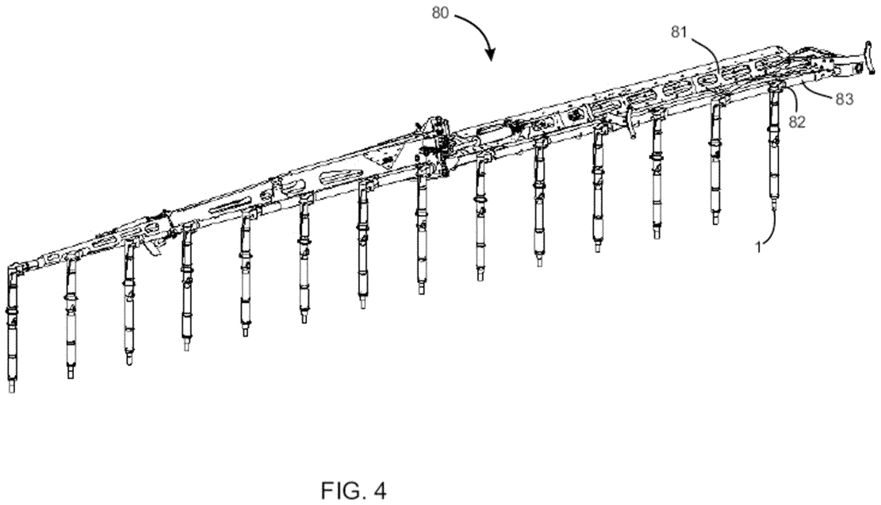

Fig. 4 illustrates an air boom assembly **80** comprising a boom **81** having a plurality of air boom outlets **82** (only one labeled) to which the particulate fertilizer is carried by a plurality of corresponding air lines **83** (only one labeled), the plurality of air boom outlets **81** fitted with corresponding drop tubes **1** (only one labeled).

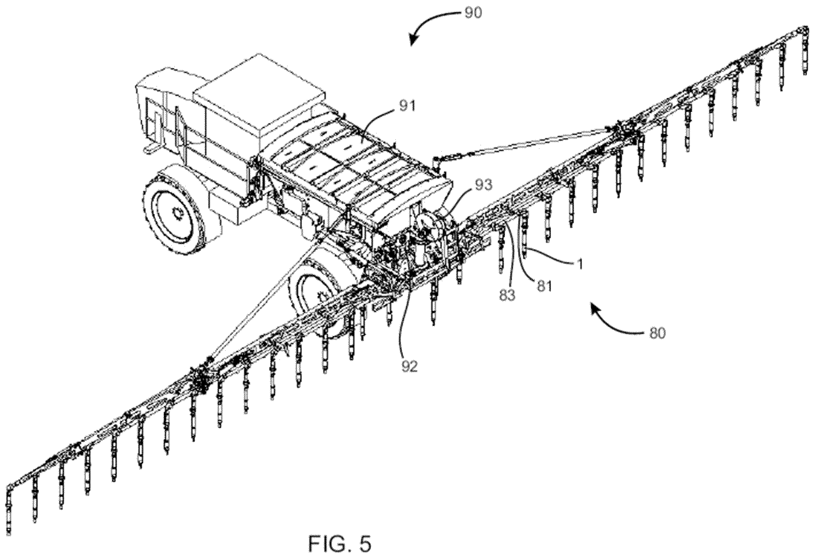

Fig. 5 illustrates an air boom spreader **90** having mounted thereon the air boom assembly **80.** The air boom spreader **90** comprises a hopper **91** for containing particulate fertilizer, a metering device **92** in particulate fertilizer communication with the hopper, the metering device partitioning the particulate fertilizer into portions, a blower **93** to generate an air stream. Particulate fertilizer is fed from the hopper **91** to the metering device **92** where the particulate fertilizer is apportioned to individual air lines **83** (only one labeled). The blower **93** generates an air stream that carries the particulate fertilizer through the air lines **83** to the air boom outlets **81** (only one labeled). From the air boom outlets **81,** the particulate material is delivered on to a field through the drop tubes **1** (only one labeled).

The novel features will become apparent to those of skill in the art upon examination of the description. It should be understood, however, that the scope of the claims should not be limited by the embodiments but should be given the broadest interpretation consistent with the wording of the claims and the specification as a whole.

## Claims

1. A drop tube for dropping particulate fertilizer from an air boom assembly onto a field, the drop tube comprising:
a rigid elbow connectable to an air boom outlet of the air boom assembly and configured to cooperate with the air boom outlet to direct the particulate fertilizer away from the air boom outlet into the drop tube and vertically downward in the drop tube when in operation;
an upper flexible section connected to the rigid elbow and in particulate fertilizer communication with the rigid elbow to receive the particulate fertilizer from the rigid elbow, the upper flexible section bendable in at least a direction parallel to a direction of travel of the air boom assembly to permit flexing of the drop tube in response to contacting obstructions in the direction of travel;
a rigid section connected to the upper flexible section and in particulate fertilizer communication with the upper flexible section to receive the particulate fertilizer from the upper flexible section, the rigid section comprising an air exhaust vent in a side thereof and a deflector therein, the deflector constricting flow of air and the particulate fertilizer in the rigid section to a position below the air vent where the deflector no longer restricts the flow of the air and particulate fertilizer;
a lower flexible section connected to the rigid section and in particulate fertilizer communication with the rigid section to receive the particulate fertilizer from the rigid section; the lower flexible section bendable in at least the direction parallel to the direction of travel of the air boom assembly to permit flexing of the drop tube in response to contacting obstructions in the direction of travel; and,
an exit aperture through which the particulate fertilizer exits the drop tube, the exit aperture having a cross-sectional area less than a cross-sectional area of the lower flexible section of the drop tube above the exit aperture.

2. The drop tube of claim 1, wherein the exit aperture is an opening at a bottom end of the lower flexible section.

3. The drop tube of claim 1, further comprising a rigid outlet tube connected to and in particulate fertilizer communication with the lower flexible section to receive the particulate material from the lower flexible section, wherein the rigid outlet tube comprises the exit aperture.

4. The drop tube of any one of claims 1 to 3, further comprising a guide for reducing transverse flexing of the drop tube relative to the direction parallel to the direction of travel while permitting longitudinal flexing of the guide tube in the direction parallel to the direction of travel.

5. The drop tube of claim 4, wherein the guide comprises a ring around but not attached to a circumference of the rigid section of the drop tube whereby the rigid section can move horizontally within the ring, a hinge rigidly connected to the elbow, and a rod connected to the ring and pivotally connected to the hinge, whereby the rod is pivotable on the hinge in the direction parallel to the direction of travel but not pivotable in a direction transverse to the direction of travel.

6. The drop tube of claim 5, wherein the air exhaust vent and the deflector are below the ring.

7. The drop tube of any one of claims 1 to 6, wherein the flexible sections comprise elastomeric hoses.

8. The drop tube of any one of claims 1 to 7, wherein the rigid section comprises a rigid pipe.

9. The drop tube of any one of claims 1 to 8, wherein the connections are secured with clamps.

10. The drop tube of any one of claims 1 to 9, wherein the rigid elbow is a 90-degree elbow.

11. An air boom assembly of an air boom spreader, the air boom assembly comprising:
a boom;
a plurality of air boom outlets transversely spaced apart on the boom,
a plurality of air lines terminating at respective air boom outlets of the plurality of air boom outlets; and,
a plurality of drop tubes as defined in any one of claims 1 to 10 connected to respective air boom outlets of the plurality of air boom outlets.

12. An air boom spreader for particulate fertilizer, the air boom spreader comprising:
a hopper for containing the particulate fertilizer;
a particulate fertilizer metering device in particulate fertilizer communication with the hopper, the metering device partitioning the particulate fertilizer into portions;
a blower to generate an air stream; and,
the air boom assembly as defined in claim 11,
wherein the plurality of air lines are in fluid communication with the blower and in particulate fertilizer communication with the metering device to receive respective portions of the particulate fertilizer and transport the respective portions to the respective air boom outlets and then to respective drop tubes by the air stream.
